# EUROPEAN PATENT APPLICATION

(11) **EP 1 120 595 A2**
(43) Date of publication of application: **01.08.2001**
(21) Application number: 01109732.6
(22) Date of filing: 13.04.1993
(51) Int. Cl.: F16L 11/04, B32B 27/34, B32B 27/30, F16L 9/12, B32B 27/08, B32B 27/32, F16L 11/12, B32B 1/08

(54) **Multi-layer fuel and vapor tube**

(30) Priority: 14.04.1992 US 868754; 11.06.1992 US 897302; 11.06.1992 US 897376
(62) Divisional of application: 93909321.7
(71) Applicant: ITT MANUFACTURING ENTERPRISES, INC., Wilmington, Delaware 19801 (US)
(72) Inventor: Mitchell, Frank L., Rochester Hills, Michigan 48306 (US); Noone, David L., Southfield, Michigan 48076 (US); Wenig, Peter, 34431 Marsberg-Bredelar (DE)
(74) Representative: Dreiss, Fuhlendorf, Steimle & Becker

(57) **Abstract**

A layered tubing (10) for use in a motor vehicle composed of a thick outer tubing (12) having an inner and an outer face, the outer tubing (12) made of an extrudable thermoplastic such as a polyamide like Nylon 12; a thin intermediate bonding layer (16) bonded to the inner face of the thick outer layer (12), the bonding layer (16) composed of an extrudable melt-processible thermoplastic capable of sufficiently permanent laminar adhesion to the polyamide outer tubing (12); and an inner hydrocarbon barrier layer (14) bonded to the intermediate bonding layer (16), the inner layer (14) composed of an extrudable, melt processible thermoplastic capable of sufficiently permanent laminar adhesion with the intermediate bonding layer (16), the thermoplastic containing as a major constituent a fluoroplastic such as polychlorotrifluoroethylene, ethylene tetrafluoroethylene, polyvinylidine fluoride, polyvinyl fluoride, and the like.

## Description

### I. Field of the Invention:

The present invention relates to a hose for use in a motor vehicle. More particularly, the present invention relates to a multi-layer hose which can be employed as a fuel line or vapor recovery line in a motor vehicle.

### II. Background of the Invention:

Single layer fuel lines and vapor return lines of synthetic materials such as polyamides have been proposed and employed in the past. Fuel lines employing such materials generally have lengths of at least several meters. It is important that the line, once installed, not materially change during the length of operation, either by shrinkage or elongation or as a result of the stresses to which the line may be subject during use.

It is also becoming increasingly important that the lines employed be essentially impervious to hydrocarbon emissions due to permeation through the tubing. It is anticipated that future Federal and state regulations will fix the limit for permissible hydrocarbon emissions due to permeation through such lines. Regulations which will be enacted in states such as California will fix the total passive hydrocarbon emission for a vehicle at 2 g/m² per 24 hour period as calculated by evaporative emission testing methods such as those outlined in Title 13 of the California Code of Regulations, section 1976, proposed amendment of September 26, 1991. To achieve the desired total vehicle emission levels, a hydrocarbon permeation level for the lines equal to or below 0.5 g/m² per 24 hour period would be required.

Finally, it is also imperative that the fuel line employed be impervious to interaction with corrosive materials present in the fuel such as oxidative agents and surfactants as well as additives such as ethanol and methanol.

Various types of tubing have been proposed to address these concerns. In general, the most successful of these have been co-extruded multi-layer tubing which employ a relatively thick outer layer composed of a material resistant to the exterior environment. The innermost layer is thinner and is composed of a material which is chosen for its ability to block diffusion of materials such as aliphatic hydrocarbons, alcohols and other materials present in fuel blends, to the outer layer. The materials of choice for the inner layer are polyamides such as Nylon 6, Nylon 6.6, Nylon 11, and Nylon 12.

Alcohol and aromatics in the fluid conveyed through the tube diffuse at different rates through the tubing wall from the aliphatic components. The resulting change in the composition of the liquid in the tubing can change the solubility thresholds of the material so as, for example, to be able to crystallize monomers and oligomers of materials such as Nylon 11 and Nylon 12 into the liquid. The presence of copper ions, which can be picked up from the fuel pump, accelerates this crystallization. The crystallized precipitate can block filters and fuel injectors and collect to limit travel of the fuel-pump or carburettor float as well as build up on critical control surfaces of the fuel pump.

In US-A-5,076,329 a five- layer fuel line is proposed which is composed of a-thick outer layer formed of Nylon 11 or Nylon 12, a thick intermediate layer of Nylon 6, and a thin intermediate bonding layer between and bonded to the intermediate and outer layers formed of a polyethylene or a polypropylene. On the interior of the tube is an inner layer of Nylon 6 with a thin intermediate solventblocking layer formed of an ethylene-vinyl alcohol copolymer transposed between. The use of Nylon 6 in the inner fluid contacting surface is designed to eliminate at least a portion of the monomer and oligomer dissolution which occurs with Nylon 11 or Nylon 12.

In US-A-5,038,833 a three-layer fuel line is proposed in which a tube is formed having a co-extruded outer wall of Nylon 11 or Nylon 12, an intermediate alcohol barrier wall formed from an ethylene-vinyl alcohol copolymer, and an inner water-blocking wall formed from a polyamide such as Nylon 11 or Nylon 12. In DE-A-40 06 870, a fuel line is proposed in which an intermediate solvent barrier layer is formed of unmodified Nylon 6.6 either separately or in combination with blends of polyamide elastomers. The internal layer is also composed of polyamides; preferably modified or unmodified Nylon 6 while the outer layer is composed of either Nylon 6 or Nylon 12.

Another tubing designed to be resistant to alcoholic media is disclosed in GB-A-2 204 376 in which a tube is produced which has an thick outer layer composed of polyamides such as Nylon 6 or 6.6 and/or Nylon 11 or 12 which are co-extruded with an alcohol-resistant polyolefin, a co-polymer of propylene and maleic acid.

Heretofore it has been extremely difficult to obtain satisfactory lamination characteristics between dissimilar polymer layers. Thus all of the multi-layer tubing proposed previously has employed polyamide-based materials in most or all of the multiple layers. While many more effective solvent-resistant chemicals exist, their use in this area is limited due to limited elongation properties, strength and compatibility with Nylon 11 and 12. Additionally, the previous disclosures fail to address or appreciate the phenomenon of electrostatic discharge.

Electrostatic discharge can be defined as the release of electric charge built up or derived from the passage of charged particles through a medium or conduit composed of essentially non-conductive materials. The electrostatic charge is repeatedly replenished with the passage of additional volumes of fuel through the conduit. Discharge repeatedly occurs in the same localized area gradually eroding the area and leading to eventual rupture leading to the danger of fire and explosion of the flammable contents of the tubing.

Thus it would be desirable to provide a tubing material which could be employed in motor vehicles which would be durable and prevent or reduce permeation of organic materials therethrough. It would also be desirable to provide a tubing material which would be essentially nonreactive with components of the liquid being conveyed therein. Finally, it would be desirable to provide a tubing material which would be capable of preventing the build-up of electrostatic charge therein or would be capable of safely dissipating any electrostatic charge induced therein.

### SUMMARY OF THE INVENTION

The present invention is a multi-layer tube which can be used on motor vehicles for applications such as in a fuel line or a vapor return or recovery line. The tube of the present invention is composed of:
a thick flexible outer tubing having an inner and an outer face, the outer tubing consisting essentially of an extrudable melt processible thermoplastic having an elongation value of at least 150% and an ability to withstand impacts of at least 2,7 J (2 ft-lbs) at temperatures below about -20°C;
a thin intermediate bonding layer bonded to the inner face of the thick outer layer, the bonding layer consisting essentially of an extrudable melt processible thermoplastic capable of sufficiently permanent laminar adhesion to the outer tubing; and
an inner hydrocarbon barrier layer bonded to the intermediate bonding layer, the inner layer consisting of an extrudable melt processible thermoplastic capable of sufficiently permanent laminar adhesion with the intermediate bonding layer, the thermoplastic containing as a major constituent a fluoroplastic selected from the group consisting of polychlorotrifluoroethylene, ethylene tetrafluoroethylene copolymers, polyvinylidine fluoride, polyvinyl fluoride, and mixtures thereof.

The inner hydrocarbon layer may be capable of dissipating electrostatic energy, the electrostatic dissipation capacity being in a range between about 10⁴ to 10⁹ Ohm/cm².

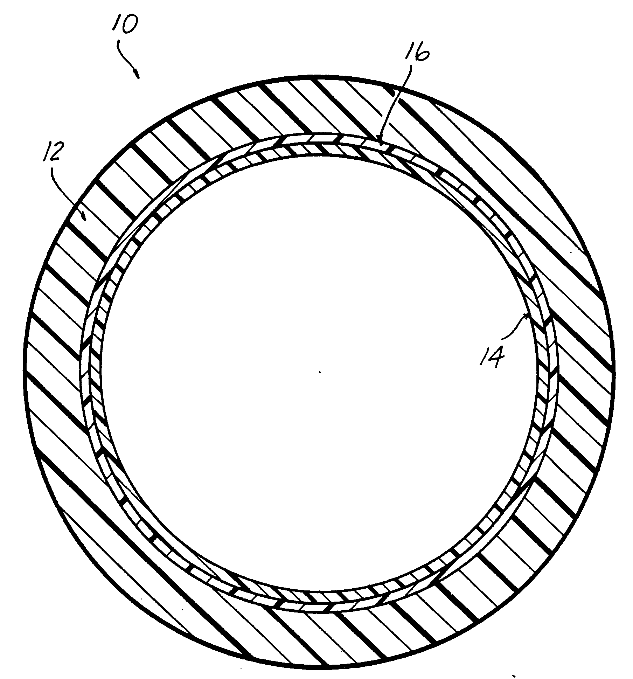

### DESCRIPTION OF THE DRAWING

The objects, features and advantages of the present invention will become more readily apparent from the following description, reference being made to the following drawing in which the Figure is a sectional view through a piece of tubing of the present invention.

### DESCRIPTION OF THE PREFERRED EMBODIMENT

The present invention is a multi-layer fuel line and vapor tube which contains at least one bonding layer and at least an outer and an inner tubing layer. The tubing of the present invention is, preferably, fabricated by co-extruding given thermoplastic materials in a conventional co-extrusion process. The tubing may either be co-extruded to a suitable length or may be coextruded in continuous length and cut to fit the given application subsequently. The tubing of the present invention may have an outer diameter up to 50 mm. However, in applications such as fuel lines and vapor recovery systems, outer diameter of up to 2.5 inches are preferred.

The material may have any suitable wall thickness desired. However, in automotive systems such as those described herein, wall thicknesses between 0.5 mm and 2 mm are generally employed with wall thicknesses of approximately 0.8 mm to approximately 1.5 mm being preferred; and wall thicknesses between about 0.8 mm and about 1.25 mm being most preferred. While it is within the scope of this invention to prepare a tubing material having a plurality of overlaying layers of various thermoplastic materials, the tubing of the present invention generally has a maximum of five layers inclusive of the bonding layers. In the preferred embodiment, the tubing material has three or four.

The tubing 10 of the present invention is a material which is suitable for use in motor vehicles and comprises a relatively thick outer layer 12 which is nonreactive with the external environment and can withstand various shocks, vibrational fatigue, and changes in temperature as well as exposure to various corrosive or degradative compounds to which it would be exposed through the normal course of operation of the motor vehicle.

It is anticipated that both the outer tubing layer 12 as well as any interior layers bonded thereto would be suitable for use at an outer service temperature range between about-40°C and about 150°C, with a range of -20°C to 120°C being preferred. The various layers of tubing are integrally laminated to one another and resistant to delamination throughout the lifetime of the tubing. The tubing thus formed will have a tensile strength of no less than 25 N/mm² and an elongation value of at least 150%. The tubing will have a burst strength at 23°C and 120°C of at least 20 bar. The multi-layer tubing of the present invention is sufficiently resistant to exposure to brake fluid, engine oil and peroxides such as those which may be found in gasoline.

In the first embodiment of the present invention, the multilayer tubing comprises an outer layer consisting essentially of a thermoplastic material selected from the group consisting of 12 carbon block polyamides, 11 carbon block polyamides, thermoplastic elastomers, and mixtures thereof; an inner layer consisting essentially of a thermoplastic material selected from the group consisting essentially of polyvinylidine fluoride, polyvinyl fluoride, and mixtures thereof; and an intermediate bonding layer consisting essentially of an extrudable thermoplastic capable of sufficiently permanent laminar adhesion to the polyamide outer tubing, the intermediate bonding layer thermoplastic material selected from the group consisting of polyvinylidine fluoride, polyvinyl fluoride, and mixtures thereof.

In the second embodiment of the present invention, the multilayer tubing comprises an outer layer consisting essentially of a thermoplastic material selected from the group consisting of 12 carbon block polyamides, 11 carbon block polyamides, thermoplastic elastomers, and mixtures thereof; an inner layer consisting essentially of a thermoplastic material selected from the group consisting essentially of polychlorotrifluoroethylene, ethylene tetrafluoroethylene copolymers, and mixtures thereof; and an intermediate bonding layer consisting essentially of an extrudable thermoplastic capable of sufficiently permanent laminar adhesion to the polyamide outer tubing, the intermediate bonding layer thermoplastic material selected from the group consisting of polyvinylidine fluoride, polyvinyl fluoride, blends of polyvinyl acetate and urethane, and mixtures thereof.

In the third embodiment of the present invention, the multilayer tubing comprises an outer layer consisting essentially of a thermoplastic 6-carbon block polyamide; an inner layer consisting essentially of a thermoplastic material selected from the group consisting essentially of polychlorotrifluoroethylene, ethylene tetrafluoroethylene copolymers, and mixtures thereof; and an intermediate bonding layer consisting essentially of an extrudable thermoplastic capable of sufficiently permanent laminar adhesion to the polyamide outer tubing, the intermediate bonding layer thermoplastic material selected from the group consisting of polyvinylidine fluoride, polyvinyl fluoride, blends of polyvinyl acetate and urethane, and mixtures thereof.

In general, the outer layer 12 may be composed of any melt-processible extrudable thermoplastic material which is resistant to ultra violet degradation, extreme changes in heat and exposure to environmental hazards such as zinc chloride, and degradation upon contact with engine oil and brake fluid. In the first and second embodiments of the present invention, the exterior layer is selected from the group consisting of 12 carbon block polyamides, 11 carbon block polyamides, thermoplastic elastomers, and mixtures thereof. Where thermoplastic elastomers are employed, it is anticipated that the elastomer will be a proprietary material commercially available under tradenames such as SANTOPRENE, VICHEM, KRATON, or SARLINK, or mixtures of these materials. The materials which compose the outer layer can be present in their unmodified state or can be modified with various plasticizers, flame retardants and the like in manners which would be known to one reasonably skilled in the art.

In the first and second embodiments, a polyamide such as Nylon 12 can be effectively employed. If modified, it is anticipated that the material will contain various plasticizers as are readily known in the art. The polyamide material employed, preferably, is an impact-modified material capable of withstanding impacts of 2 ft-lbs at temperatures below about -20°C.

In the third preferred embodiment, the outer layer is composed of a polyamide thermoplastic derived from the condensation polymerization of caprolactam. Such materials are commonly referred to as a 6-carbon block polyamide or Nylon 6. In this third embodiment, the 6-carbon block polyamide either inherently exhibits zinc chloride resistance or contains sufficient quantities of modifying agents to impart a level of zinc chloride resistance greater than or equal to that required by test method SAE J844; non-reactivity after 200 hour immersion in a 50% by weight zinc chloride solution. The Nylon 6 which composes the outer layer of the tubing of this embodiment can also be modified with various plasticizers, flame retardants and the like in manners which would be known to one reasonably skilled in the art. In this embodiment, the 6-carbon block polyamide material is preferably a multicomponent system comprised of a Nylon-6 copolymer blended with other Nylons and olefinic compounds. The zinc chloride resistant Nylon-6 of choice will have a melt temperature between about 220°C and 240°C. Examples of thermoplastic materials suitable for use in the tubing of the present invention are proprietary materials which can be obtained commercially under the tradenames M-7551 from NYCOA Corporation and ALLIED 1779 from Allied Chemical.

The 6-carbon black polyamide may, optionally, include other modifying agents such as various plasticizing agents generally present in amounts between about 1.0% and about 13% by total weight of the thermoplastic composition as are readily known in the art. The polyamide material employed, preferably, is an impact-modified material capable of withstanding impacts of at least 2 ft-lbs. at temperatures below about -20°C.

The outer layer 16 has a wall thickness sufficient to provide suitable strength an endurance to the multi-layer tubing of the present invention. In applications involving automotive vehicles, the outer layer 12 comprises between about 50% and about 70% of the total wall thickness. In general, the outer layer has a wall thickness between about 0.6 mm and about 0.9 mm; with a preferred wall thickness between about 0.7 mm and about 0.8 mm, and a most preferred wall thickness between about 0.7 and about 0.75 mm. As indicated previously, the material can be extruded by conventional co-extrusion methods to any continuous length desired.

The inner layer 14 is integrally bonded to the inner surface of the thick outer polyamide layer 12. In the present invention, the inner layer 14 is a chemically dissimilar, permeation resistant, chemical resistant, fuel resistant thermoplastic material which is melt processible in normal ranges of extrusion, i.e. about 175°C to about 250°C. By the term "chemically dissimilar" it is meant that the inner layer 14 consists essentially of a non-polyamide material which is capable of adhesion to a bonding layer interposed between the thick outer layer and the inner layer in a manner which will be described subsequently.

In each of the preferred embodiments, the thermoplastic material which comprises the inner layer is a fluoroplastic material selected from the group consisting of polyvinylidine fluoride, polyvinyl fluoride, polychlorotrifluoroethylene, ethylene tetrafluoroethylene copolymers, and mixtures thereof. In the first embodiment, it is preferred that the fluoroplastic material be selected from the group consisting of polyvinylidine fluoride, polyvinyl fluoride, and mixtures thereof. In the second and third embodiments, it is preferred that the fluoroplastic material be selected from the group consisting of polychlorotrifluoroethylene, ethylene tetrafluoroethylene copolymers, and mixtures thereof.

In the first embodiment, the thermoplastic material which comprises the inner layer is, preferably, a polyvinylidine fluoroplastic derived from the thermal dehalogenation of chlorodifluoroethane commercially available under the tradenames "FLORAFLON" and "KYNAR" from Atochem Inc. elf Aquitaine Group of Philadelphia, Pennsylvania.

In the second embodiment, the preferred material is an ethylene tetrafluoroethylene copolymer having a melt temperature between about 270°C and 560°C and a specific gravity of 1.7. The ethylene tetrafluoroethylene copolymer employed herein is derived from the copolymerization of ethylene with tetrafluoroethylene. The preferred polymeric material has an ethylene-derived content between about 40% and about 70% and a tetrafluoroethylene content between about 30% and about 60% by total polymer weight with minor amounts of proprietary materials being optionally present. Suitable materials are commercially available under the tradenames "TEFZEL 210", "TEFZEL 200", and "TEFZEL 280" from I.G. duPont de Nemours, Inc. of Wilmington, Delaware.

In the third embodiment, the thermoplastic material which comprises the inner layer is a fluoroplastic material selected from the group consisting of polychlorotrifluoroethylene, ethylene tetrafluoroethylene copolymers and mixtures thereof. The material employed will, preferably, have a melt temperature between about 270°C and 560°C and a specific gravity of 1.7. Suitable polychlorotrifluoroethylene fluoroplastic materials may be derived from the pyrolysis of chlorodifluoromethane. Suitable ethylene tetrafluoroethylene copolymers are proprietary materials. It is believed that such materials broadly have ethylenederived contents between about 40% and about 70%; tetrafluoroethylene contents between about 30% and about 60% by total polymer weight; and minor amounts of proprietary materials. Suitable materials are commercially available under the tradenames "TEFZEL 210", "TEFZEL 200", and "TEFZEL 280" from I.G. duPont de Nemours, Inc. of Wilmington, Delaware.

The thermoplastic material employed in the inner layer 14 is capable of serving as a hydrocarbon barrier to prevent significant permeation of the aromatic and aliphatic components of gasoline through to the polyamide outer layer 12 of the tubing 10 and thus, out to the surrounding environment.

Preferably, the inner layer 14 may also exhibit conductive characteristics rendering it capable of dissipation of electrostatic charge in the range of 10⁴ to 10⁹ Ohm/cm². The fluoroplastic material employed in the present invention may be inherently conductive in these ranges or, preferably, includes in its composition a conductive media in sufficient quantity to permit electrostatic dissipation in the range defined. The conductive media may be any suitable material of a composition and shape capable of effecting this static dissipation. The conductive material may be selected from the group consisting of elemental carbon, stainless steel and highly conductive metals such as copper, silver, gold, nickel, silicon and mixtures thereof. The term "elemental carbon" as used herein is employed to describe and include materials commonly referred to as "carbon black". The carbon black can be present in the form of carbon fibers, powders, spheres, and the like.

The amount of conductive material contained in the fluoroplastic is generally limited by considerations of low temperature durability and resistance to the degradative effects of the gasoline or fuel passing through the tubing. In the preferred embodiment, the fluoroplastic material contains conductive material in an amount sufficient to effect electrostatic dissipation. However, the maximum amount employed therein is less than 5% by volume.

The conductive material can either be interstitially integrated, which is blended into the crystalline structure of the polymer and/or the conductive material can be copolymerized, which is incorporated during polymerization of the monomers that make up the extrudable fluoroplastic material. Without being bound to any theory, it is believed that carbon-containing materials such as carbon black may be subject to carbon co-polymerization with the surrounding fluoroplastic material. Material such as stainless steel are more likely to be interstitially integrated into the crystalline structure of the polymer.

The fluoroplastic material employed in the inner layer 14 of the present invention is, preferably, chemically dissimilar in structure and composition from the outer layer. In order to accomplish effective lamination of the two dissimilar materials, the tubing of the present invention also includes at least one intermediate layer 16 interposed between the two previously described layers and co-extruded therewith which is capable of achieving a suitable homogeneous bond between itself and the two respective layers. The intermediate bonding layer 16 is generally composed of a more elastic material than that employed in the inner layer.

In the preferred embodiment, the intermediate bonding layer 16 is composed of a thermoplastic material which also exhibits properties of resistance to permeation of aliphatic and aromatic materials such as those found in fuel. The thermoplastic material employed herein is preferably a melt-processible co-extrudable thermoplastic which may or may not contain various plasticizers and other modifying agents. The intermediate bonding layer 16 consists essentially of a fluoroplastic material which is selected from the group consisting of polyvinylidine fluoride, polyvinyl fluoride, polyvinyl acetate and urethane blends, and mixtures thereof. One preferred fluoroplastic material is a polyvinylidine derived from the thermal dehalogenation of chlorodifluoroethane. One preferred non-fluorocarbon material is a polyvinyl acetate/urethane blend. The material of choice exhibits an affinity to polymers employed in the outer layer such as Nylon 12 or Nylon 6. Suitable fluoroplastic materials are commercially available under the tradename "ADEFLON A"; while suitable non-fluoroplastic materials are commercially available under the tradename "ADEFLON D" from Atochem Inc. elf Aquitaine Group of Philadelphia, Pennsylvania.

The intermediate bonding layer 16, in addition to permitting a homogeneous bond between the inner and outer layers and exhibiting resistance to permeation of fuel components, also may exhibit conductive or static dissipative characteristics such as those described previously. Thus, the intermediate bonding layer may optionally include sufficient amounts of conductive media to effect electrostatic dissipation in the range of 10⁴ to 10⁹ Ohm/cm². As with the inner layer, the intermediate bonding layer may be inherently electrostatically dissipative or may be rendered so by the inclusion of certain conductive material such as those selected from the group consisting of elemental carbon, stainless steel, copper, silver, gold, nickel, silicon and mixtures thereof.

It is preferred that the inner layer 14 and the bonding layer 16 be maintained at the minimum thickness necessary to prevent permeation of the fuel through the tubing material. It is preferred that the amount of hydrocarbon permeation through the tubing 10 be no greater than 0.5 gm/m² in a 24 hour interval. The thickness of the inner layer can be varied to accomplish this end.

In the preferred embodiment, the inner layer has the minimum wall thickness sufficient to achieve the permeation resistance desired. In general, the inner layer is thinner than the outer layer with the thickness of the outer layer being between about 50% and about 60% of the total wall thickness of the multi-layer tubing. Preferably, the inner wall thickness is between about 0.01 mm and about 0.2 mm with a thickness of about 0.05 mm and about 0.2 being preferred and a thickness between about 0.05 mm and about 0.17 mm being most preferred.

The intermediate bonding layer 16 is of sufficient thickness to permit an essentially homogeneous bond between the inner and outer layers. In general, the intermediate bonding layer can be thinner than the other two layers and can constitute between about 10% and about 20% of the total wall thickness of the multi-layer tube. In the preferred embodiment, the thickness of the intermediate bonding layer is between about 0.01 mm and about 0.2 mm with a thickness between about 0.05 mm and about 0.2 mm being preferred; and a thickness between about 0.05 mm and about 0.15 mm being most preferred.

The total wall thickness of the tubing of the present invention is generally between about 0.5 mm and about 2.0 mm with a wall thickness between about 0.8 and about 1.25 mm being preferred.

The tubing of the present invention may also optionally include an outer jacket (not shown) which surrounds the outer layer. The outer jacket may be either co-extruded with the other layers during the extrusion process or may be put on in a subsequent process such as cross-extrusion. The outer jacket may be made of any material chosen for its structural or insulating characteristics and may be of any suitable wall thickness. In the preferred embodiment, the outer jacket may be made of a thermoplastic material selected from the group consisting of zinc-chloride resistant Nylon 6, Nylon 11, Nylon 12, polypropylene, and thermoplastic elastomers such as SANTOPRENE, KRATON, VICHEM and SARLINK. If desired, these materials may be modified to include flame retardants, plasticizers and the like.

In the following, preferred embodiments will be disclosed. The first embodiment, a layered tubing comprising a thick flexible outer tubing having an inner and an outer face, the outer tubing consisting essentially of an extrudable melt-processible thermoplastic having an elongation value of at least 150 % and an ability to withstand impacts of at least 2 ft-lbs at temperatures below about -20°C; a thin intermediate bonding layer bonded to the inner face of the thick outer layer, the bonding layer consisting essentially of an extrudable melt processible thermoplastic capable of sufficiently permanent laminar adhesion to the inner face of the outer tubing; and an inner hydrocarbon barrier layer bonded to the intermediate bonding layer, the inner layer consisting of an extrudable, melt-processible thermoplastic capable of sufficiently permanent laminar adhesion with the intermediate bonding layer, the melt-processible thermoplastic consisting essentially of a fluoroplastic selected from the group consisting of polychlorotrifluoroethylene, ethylene tetrafluoroethylene copolymers, polyvinyl fluoride, polyvinylidine fluoride and mixtures thereof. In an improvement the inner hydrocarbon barrier layer is capable of dissipating electrostatic energy, the electrostatic dissipation capacity being in a range between about 10⁴ to 10⁹ Ohm/cm². Preferably the inner hydrocarbon layer contains quantities of a conductive material sufficient to provide electrostatic dissipation capability in a range between about 10⁴ to 10⁹ Ohm/cm². Preferably the conductive material is selected from the group consisting of elemental carbon, copper, silver, gold, nickel, silicon, and mixtures thereof and/or is present in an amount less than about 5 % by volume of the polymeric material. Preferably the conductive material is interstitially integrated into the melt processible fluoroplastic material and /or is elemental carbon and is copolymerized with the extrudable fluoroplastic material. In an improvement the extrudable thermoplastic of the thick outer tubing is a polyamide selected from the group consisting of Nylon 11, Nylon 12, zinc chloride resistant Nylon 6, Santoprene, Kraton, Vichem, Sarlink and mixtures thereof. Preferably the thermoplastic material employed in the intermediate bonding layer exhibits at least some resistance to interaction with short-chain hydrocarbon molecules present in material conveyed through the tubing. Preferably the thermoplastic material employed in the intermediate bonding layer includes as a major constituent an extrudable, melt processible thermoplastic selected from the group consisting of polyvinylidine fluoride, polyvinyl fluoride, blends of polyvinyl acetate and urethane, and mixtures thereof.

The embodiments preferably further comprise an exterior jacket overlying the thick outer tubing, the exterior jacket composed of a material consisting essentially of a thermoplastic rubber selected from the group consisting of Nylon 11, Nylon 12, zinc chloride resistant Nylon 6, Santoprene, Kraton, Vichem, Sarlink and mixtures thereof.

Another embodiment, a layered tubing for use in a motor vehicle, comprising an outer tubing having an inner and an outer face, the outer tubing consisting essentially of an extrudable polyamide having an elongation value of at least 150 % and an ability to withstand impacts of at least 2 ft-lbs at temperatures below about -20°C; an intermediate bonding layer having a thickness between about 0.05 mm and about 0.2 mm bonded to the inner face of the thick outer layer, the bonding layer consisting essentially of an extrudable thermoplastic capable of sufficiently permanent laminar adhesion to the polyamide outer tubing; and an inner hydrocarbon barrier layer bonded to the intermediate bonding layer having a thickness between about 0.05 mm and about 0.2mm, the inner layer consisting essentially of an extrudable, melt process fluoroplastic capable of sufficiently permanent laminar adhesion with the intermediate bonding layer selected from the group consisting of polychlorotrifluoroethylene, ethylene tetrafluoroethylene copolymers, polyvinylidine fluoride, polyvinyl fluoride and mixtures thereof. In an improvement the extrudable thermoplastic of the thick outer tubing is a polyamide selected from the group consisting of Nylon 11, Nylon 12, zinc chloride resistant Nylon 6 and mixtures thereof. Preferably the inner hydrocarbon barrier layer is selected from the group consisting of polychlorotrifluoroethylene, ethylene tetrafluoroethylene copolymers and mixtures thereof. Further preferably the extrudable thermoplastic of the thick outer tubing is derived by the condensation polymerization of caprolactam and/or is a polyamide selected from the group consisting of Nylon 11, Nylon 12 and mixtures thereof.

In an improvement the tubing further comprising an exterior jacket overlying the thick outer tubing, the exterior jacket composed of a material consisting essentially of a thermoplastic rubber selected from the group consisting of Nylon 11, Nylon 12, zinc chloride resistant Nylon 6, Santoprene, Kraton, Vichem, Sarlink, polypropylene and mixtures thereof. Preferably the thermoplastic material of the inner hydrocarbon barrier layer is capable of dissipating electrostatic energy, the electrostatic dissipation capacity being in a range between about 10⁴ to 10⁹ Ohm/cm². Further preferably the thermoplastic material of the inner hydrocarbon barrier layer contains quantities of a conductive material sufficient to provide electrostatic dissipation capacity in a range between about 10⁴ to 10⁹ Ohm/cm². In an embodiment the conductive material is selected from the group consisting of elemental carbon, copper, silver, gold, nickel, silicon, and mixtures thereof and is present in an amount less than about 5 % by volume of the extrudable thermoplastic material and/or is interstitially integrated into the melt processible fluoroplastic-material and/or the conductive material is elemental carbon and is copolymerized with the extrudable fluoroplastic material.

In an improvement the extrudable thermoplastic of the intermediate bonding layer is a thermoplastic selected from the group consisting of polyvinylidine fluoride, polyvinyl fluoride, blends of polyvinyl acetate and urethane, and mixtures thereof.

Another preferred embodiment of a layered tubing for use in a motor vehicle comprising a thick flexible outer tubing having an inner and an outer face, the outer tubing consisting essentially of an extrudable melt-processible thermoplastic having an elongation value of at least 150 % and an ability to withstand impacts of at least 2 ft-lbs at temperatures below about -20°C; a thin intermediate bonding layer bonded to the inner face of the thick outer layer, the bonding layer consisting essentially of an extrudable melt processible thermoplastic capable of sufficiently permanent laminar adhesion to the inner face of the outer tubing, the bonding layer selected from the group consisting of polyvinyl fluoride, polyvinylidine fluoride, blends of polyvinyl acetate and mixtures thereof; and an inner hydrocarbon barrier layer bonded to the intermediate bonding layer, the inner layer consisting of an extrudable, melt-processible thermoplastic capable of sufficiently permanent laminar adhesion with the intermediate bonding layer, the melt-processible thermoplastic consisting essentially of a fluoroplastic selected from the group consisting of polychlorotrifluoroethylene, ethylene tetrafluoroethylene copolymers, polyvinyl fluoride, polyvinylidine fluoride and mixtures thereof. Preferably the inner hydrocarbon layer contains quantities of a conductive material sufficient to provide electrostatic dissipation capability in a range between about 10⁴ to 10⁹ Ohm/cm² said conductive material selected from the group consisting of elemental carbon, copper, gold, silver, nickel, silicon, and mixtures thereof. In an improvement the conductive material is present in an amount less than about 5% by volume of the polymeric material. Preferably the extrudable thermoplastic of the thick outer tubing is a polyamide selected from the group consisting of Nylon 11, Nylon 12, zinc chloride resistant Nylon 6, Santoprene, Kraton, Vichem, Sarlink and mixtures thereof. Preferably the thermoplastic material employed in the intermediate bonding layer exhibits at least some resistance to interaction with short-chain hydrocarbon molecules present in material conveyed through the tubing. In an improvement the intermediate bonding layer is selected from the group consisting of polyvinylidine fluoride, polyvinyl fluoride and mixtures thereof and has a thickness between about 0.05 mm and about 0.2 mm; the inner hydrocarbon barrier layer has a thickness between about 0.05 mm and about 2.0 mm and is selected from the group consisting of polyvinyl fluoride, polyvinylidine fluoride, and mixtures thereof; and the outer tubing is selected from the group consisting of Nylon 11, Nylon 12, Santoprene, Kraton, Vichem, Sarlink and mixtures thereof. Preferably the outer tubing is selected from the group consisting of Nylon 11, Nylon 12, Santoprene, Kraton, Vichem, Sarlink and mixtures thereof; the intermediate bonding layer has a thickness between about 0.05 mm and about 0.2 mm and is selected from the group consisting of polyvinyl fluoride, polyvinylidine fluoride and mixtures thereof; and the inner hydrocarbon barrier layer bonded to the intermediate bonding layer has a thickness between about 0.05 mm and about 0.2 mm, the inner layer consisting essentially of a fluoroplastic selected from the group consisting of polychlorotrifluoroethylene, ethylene tetrafluoroethylene copolymers, and mixtures thereof.

## Claims

1. A layered tubing (10) for use in a motor vehicle, the tubing comprising:
a flexible outer layer (12) having an inner and outer face consisting essentially of an extrudable melt processible thermoplastic; and
an inner hydrocarbon barrier layer (14) consisting of an extrudable melt processible thermoplastic;
characterized in that
an intermediate bonding layer (16) consists of an extrudable melt processible thermoplastic being capable of sufficiently permantent laminar adhesion to the inner face of the outer layer (12),
the inner layer (14) is capable of sufficiently permanent laminar adhesion with the intermediate bonding layer (16).

2. The tubing of claim 1 wherein the thermoplastic material employed in the intermediate bonding layer (16) exhibits at least some resistance to interaction with short-chain hydrocarbon molecules present in material conveyed through the tubing.

3. The tubing of claim 1 or 2 wherein the thermoplastic material employed in the intermediate bonding layer (16) includes as a major constituent a material selected from the group consisting of polyvinylidine fluoride, polyvinyl fluoride, blends of polyvinyl acetate and urethane, and mixtures thereof.

4. The tubing of one of the preceding claims, wherein the intermediate bonding layer (16) has a thickness between about 0,05 mm and about 0,2 mm.

5. The tubing of one of the preceding claims, wherein at least two intermediate bonding layers (16) interposed between the two layers (12, 14) are provided.

6. The tubing of one of the preceding claims, wherein the intermediate bonding layer (16) is co-extruded with the other layers (12, 14).

7. The tubing of one of the preceding claims, wherein the intermediate bonding layer (16) is capable of achieving a suitable homogeneous bond between itself and the two respective layers (12, 14).

8. The tubing of one of the preceding claims, wherein the intermediate bonding layer (16) is generally composed of a more elastic material than that employed in the inner and/or the outer layer (14, 12).

9. The tubing of one of claims 3 to 8, wherein one preferred fluoroplastic material is a polyvinylidine derived from the thermal dehalogenation of chlorodifluoroethane, such as ADEFLON A.

10. The tubing of one of claims 3 to 9, wherein one preferred non-fluorocarbon material is a polyvinyl acetate/urethane blend, such as ADEFLON D.

11. The tubing of one of the preceding claims, wherein the intermediate bonding layer (16) exhibits conductive and/or static dissipative characteristics.
